(19) Europäisches Patentamt
European Patent Office
Office européen des brevets

(11) Publication number: 0 188 185
A1

# (12) EUROPEAN PATENT APPLICATION

(21) Application number: 85870193.1

(22) Date of filing: 23.12.85

(51) Int. Cl.[4]: C 07 C 103/48
//C07F9/38

(30) Priority: 28.12.84 US 687327

(43) Date of publication of application:
23.07.86 Bulletin 86/30

(84) Designated Contracting States:
AT BE CH DE FR GB IT LI LU NL SE

(71) Applicant: Monsanto Company
Patent Department 800 North Lindbergh Boulevard
St. Louis Missouri 63167(US)

(72) Inventor: Reitz, David Bruce
11912 Charter House Lane
St. Louis Missouri 63146(US)

(74) Representative: Lunt, John Cooper et al,
Monsanto Europe S.A. Patent Department Avenue de
Tervuren 270-272 Letter Box No 1
B-1150 Brussels(BE)

(54) **Novel n-acyl-isopropylglycine derivatives.**

(57) N-acyl-N-isopropylglycines having the formula

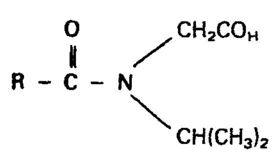

wherein R is $C_1$-$C_{20}$ alkyl, $C_1$-$C_{20}$ cycloalkyl, aryl, benzyl, or substituted benzyl are useful in the synthesis of N-phosphonomethylglycine.

Croydon Printing Company Ltd.

# NOVEL N-ACYL-N-ISOPROPYLGLYCINE DERIVATIVES

## Background of the Invention

This invention relates to novel N-acyl-N-isopropylglycine derivatives which are useful as intermediates in preparing N-phosphonomethylglycine. N-phosphonomethylglycine, known also by its common name glyphosate, is an effective and commercially important phytotoxicant which is used in controlling a broad spectrum of weeds and other undesirable vegetation. Because of glyphosate's commercial importance, much research has been devoted to improving processes for its preparation.

Processes for preparing glyphosate by dealkylation have been developed wherein N-alkyl glyphosate is employed as a starting material. Such processes have created a need for precursor compounds to prepare such N-alkyl glyphosate compounds. Among such precursor compounds which can be employed are substituted glycine, and in particular, N-acyl-N-alkylglycine. N-acyl-N-methylglycine and N-acyl-N-benzylglycine are known, but these compounds do not readily undergo dealkylation to provide glyphosate. There is needed precursor compounds which will provide N-alkyl glyphosate that can be easily converted to glyphosate by dealkylation.

## Summary of the Invention

The present invention relates to novel N-acyl-N-isopropylglycine derivatives of Formula (I)

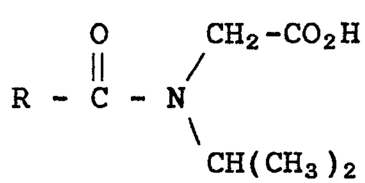

(I)

wherein R is $C_1$-$C_{20}$ alkyl, $C_1$-$C_{20}$ cycloalkyl, aryl, benzyl, and substituted benzyl.

As used herein the term "aryl" is intended to mean phenyl or substituted phenyl. The substituents referred to above with respect to "substituted benzyl" and "substituted phenyl" include typically from 1 to 3 substituents on the phenyl ring. These substituents are typically selected independently from $C_1$-$C_4$ alkyl, $C_1$-$C_4$ alkoxy, halo, nitro, cyano, haloalkyl, and methylenedioxy. The substituents are located at any position on the phenyl ring, but in some instances steric hindrance requires substitution on non-adjacent positions. Such substituents are well known to those skilled in the art and include, for example, t-butyl.

Preferred for economic reasons are compounds of Formula (I) where R is $C_1$-$C_4$ alkyl.

Most preferred for ease of synthesis and economic reasons is the compound of Formula (I) where R is $CH_3$, N-acetyl-N-isopropylglycine.

The compounds of this invention are important intermediates in preparing N-phosphonomethylglycine.

Detailed Description of the Invention

The compounds of this invention (I) where R is as previously defined can be prepared as shown below in Equation A from an appropriate N-isopropyl amide of Formula (II) in a cobalt carbonyl-catalyzed reaction with formaldehyde in the presence of a mixture of carbon monoxide and hydrogen. The procedure is described generally by H. Wakamatsu, J. Uda, and N. Yamkami, J. Chem. Soc. Chem. Comm., 1540, (1971), the teachings of which are incorporated herein by reference.

0188185



Equation A

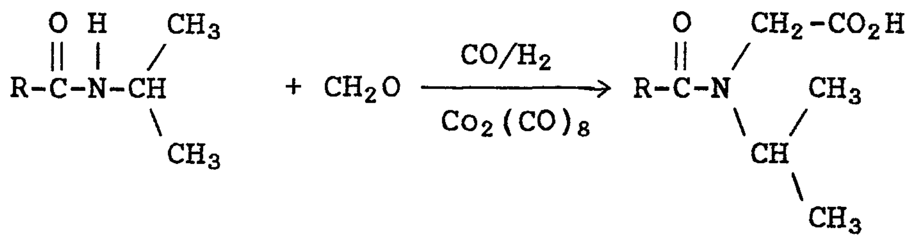


(II) (I)

The reaction can be carried out in any suitable organic solvent, such as, for example, dioxane, tetrahydrofuran, ethyl acetate and the like. By using an excess of formaldehyde, a moderate reaction temperature in the range of about 80°C to 120°C and the presence of controlled amounts of water as described in more detail in R. Stern et al, Synthetic Comm., 12, 1111, (1982), the teachings of which are incorporated by reference, it is possible to obtain yields of (I) of up to 86% and higher.

The compounds of Formula (I) can also be prepared from N-isopropylglycine (III) as shown generally in Equation B. The reaction may be conducted using: (a) a Schotten-Bauman technique as described in Organic Chemistry, R. T. Morrison and R. H. Boyd, 3rd Ed., Allyn and Bacon, Inc., Boston, 1973, p. 666, or (b) heating the reaction mass with an appropriately substituted anhydride as shown in Advanced Organic Chemistry, J. March, 2nd Ed., McGraw-Hill Book Co., N.Y., 1977, p. 383.

Equation B

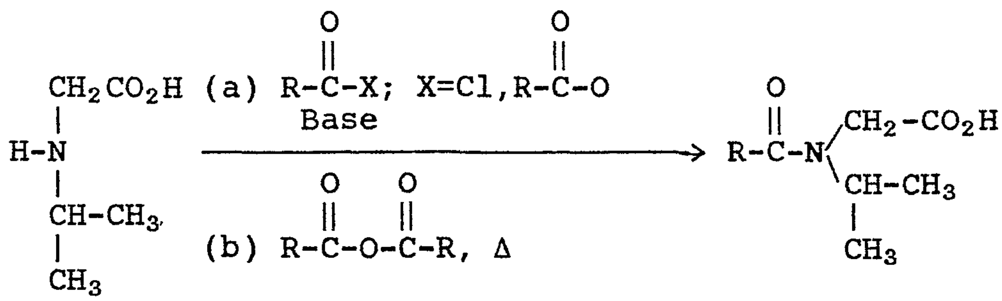


(III) (I)

This invention is further illustrated by the following example.

Example 1

Preparation of N-Acetyl-N-Isopropylglycine

In a 300 ml autoclave, under a blanket of argon, was placed 10.1 g (0.1 mol) of N-isopropylacetamide, 6.0 g (0.2 mol) paraformaldehyde, 1.0 g (2.9 mmol) of $Co_2(CO)_8$, and 100 ml of dioxane which contained 5.4 g of water. The autoclave was pressurized with syn-gas ($CO/H_2$, 1:1) $1.1 \times 10^7$ $N/m^2$ at ambient temperature and then heated to 100°C with stirring. After 2 hours, heating was discontinued, and the homogeneous reaction mixture was removed from the autoclave by suction; cooling provided 13.7 g (86%) of N-acetyl-N-isopropylglycine: mp 93.5°-95.0°C; NMR ($CDCl_3$) δ1.0-1.4 [m, 6H, $CH(C\underline{H}_3)_2$ (syn and anti)], 2.0 and 2.1 [s, 3H, $COC\underline{H}_3$ (syn and anti)], 4.0 (s, 2H, $NC\underline{H}_2$), 4.0-5.2 [m, 1H, $C\underline{H}(CH_3)_2$ (syn and anti)], 11.8 (s, 1H, $CO_2\underline{H}$).

Anal. Calcd. for $C_7H_{13}NO_3$: C, 52.82; H, 8.23; N, 8.80
Found: C, 52.70; H, 8.25; N, 8.80

Similarly, if one reacts N-isopropylstearylamide, N-isopropylcyclohexylamide, and N-isopropylbenzamide with paraformaldehyde in the presence of syn gas and $Co_2(CO)_8$, one can isolate N-isopropyl-N-stearoylglycine (I, R = n-$C_{17}H_{35}$), N-cyclohexoyl-N-isopropylglycine (I, R = cyclo $C_6H_{11}$),

and N-benzoyl-N-isopropylglycine (I, R = $C_6H_5$), respectively. The other compounds within the scope of this invention can be prepared in similar fashion.

Example 2

Conversion of N-Acetyl-N-Isopropylglycine To N-Isopropyl-N-Phosphonomethylglycine

To a 50 ml 3-necked flask fitted with a stir bar, condenser, thermometer, and an addition funnel was added 4.23 g (26.6 mmol) of N-acetyl-N-isopropylglycine dissolved in 10 ml of 20% HCl. The solution was heated to reflux for 6 hours. At this point, 2.29 g (27.9 mmol) of phosphorous acid was added to the solution and 2.59 g (31.9 mmol) of 37% formaldehyde solution was placed in the addition funnel. The formaldehyde solution was added slowly over an hour at 105°C. This temperature was then maintained for an additional 5 hours after the addition was complete. The volatiles were stripped from the reaction mixture under aspirator pressure to leave a viscous oil. The oil was dissolved in 5 ml of $H_2O$ and slowly began to crystallize. The crystals were collected by filtration, washed with 5 ml of $H_2O$, and air dried to yield 3.65 g (65.0%) of N-isopropyl-N-phosphonomethylglycine (pure by NMR). The filtrate and water wash were concentrated to dryness and purified by ion-exchange chromatography to yield an additional 1.58 g of product (also pure by NMR). The total yield of N-isopropyl-N-phosphonomethylglycine was 5.23 g (93.0%).

The compounds of this invention (I) are important intermediates in preparing N-isopropyl-N-phosphonomethylglycine (V) as shown below in Equation C.

Equation C

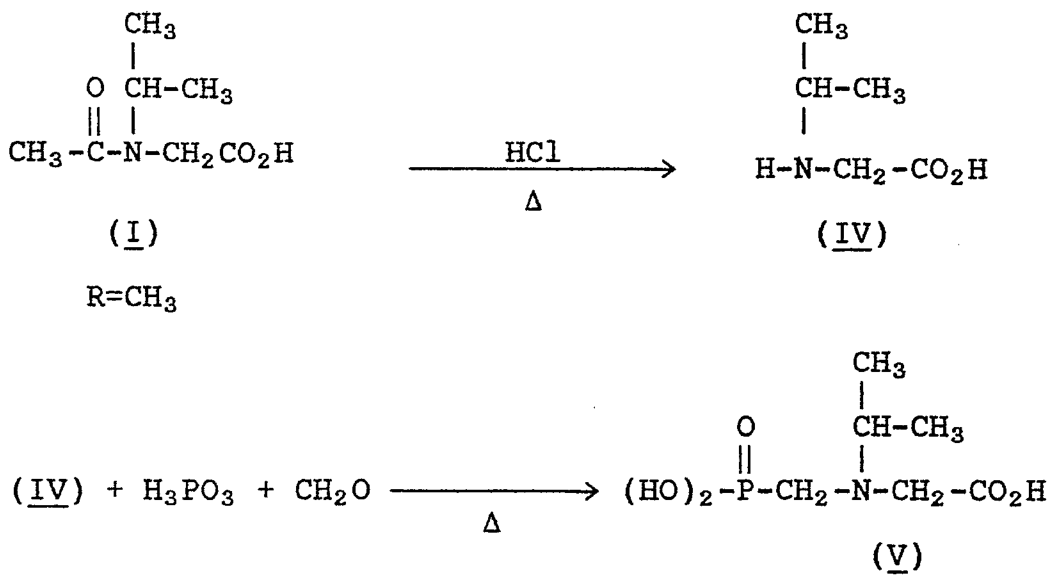


(I) (IV)

R=$CH_3$

(V)

The di- and tri-alkyl metal salts of N-isopropyl-N-phosphonomethylglycine derivatives (V) can be easily converted to N-phosphonomethylglycine by thermal dealkylation in accordance with the procedure described by Balthazor and Miller in U.S.S.N. ____________ [09-21(2322)A] filed simultaneously herewith.

Although this invention has been described with respect to specific modifications, the details thereof are not to be construed as limitations for it will be apparent that various equivalents, changes, and modifications may be resorted to without departing from the spirit and scope thereof, and it is understood that such equivalent embodiments are intended to be included herein.

WHAT IS CLAIMED IS:

1. A compound of the formula

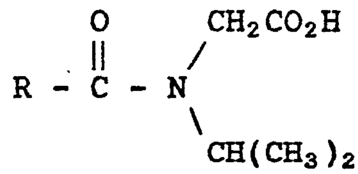

wherein R is $C_1$-$C_{20}$ alkyl, $C_1$-$C_{20}$ cycloalkyl, aryl, benzyl, or substituted benzyl.

2. The compound of Claim 1 wherein R is $C_1$-$C_4$ alkyl.

3. The compound of Claim 1 which is N-acetyl-N-isopropylglycine.

European Patent Office

# EUROPEAN SEARCH REPORT

0188185

Application number

EP 85 87 0193

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | US-A-4 197 114 (STRONG) * Column 2, lines 1-18 * --- | 1 | C 07 C 103/48 // C 07 F 9/38 |
| X | US-A-4 354 032 (STRONG) * Column 2, lines 1-16 * --- | 1 | |
| X | US-A-4 261 732 (STRONG) * Column 2, lines 1-14 * --- | 1 | |
| X | CHEMICAL ABSTRACTS, vol. 93, no. 17, 27th October 1980, page 712, no. 168567j, Columbus, Ohio, US; G. SZALONTAI et al.: "Carbon-13 dynamic NMR study of rotational barriers of the amide bond in glycine ester derivatives", & ACTA CHIM. ACAD. SCI. HUNG. 1979, 102(4), 413-21 * Whole abstract * --- | 1 | TECHNICAL FIELDS SEARCHED (Int. Cl.4) |
| X | CHEMICAL ABSTRACTS, vol. 89, no. 7, 14th August 1978, page 552, no. 59639f, Columbus, Ohio, US; Y.G. GOLOLOBOV et al.: "Reactions of esters of N-monosubstituted alpha-aminocarboxylic acids", & ZH. ORG. KHIM. 1978, 14(4), 739-45 * Whole abstract * --- -/- | 1 | C 07 C 103/00 |

The present search report has been drawn up for all claims

| Place of search | Date of completion of the search | Examiner |
|---|---|---|
| THE HAGUE | 03-04-1986 | PAUWELS G.R.A. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO Form 1503 03 82

0188185

European Patent Office

# EUROPEAN SEARCH REPORT

Application number

EP 85 87 0193

Page 2

## DOCUMENTS CONSIDERED TO BE RELEVANT

| Category | Citation of document with indication, where appropriate, of relevant passages | Relevant to claim | CLASSIFICATION OF THE APPLICATION (Int Cl 4) |
|---|---|---|---|
| X | CHEMICAL ABSTRACTS, vol. 99, no. 15, 10th October 1983, page 297, no.118341j, Columbus, Ohio, US; A. SCHWAB et al.: "Inhibition of angiotensin-converting enzyme by derivatives of 3-mercapto-2-methylpropanoyl glycine" & BIOCHEM. PHARMACOL. 1983, 32(12), 1957-60 * Whole abstract and Chemical Abstracts, Chemical Substance index, G-N, part 3 of 5 parts, July-December 1983, page 3146CS * --- | 1 | |
| A | EP-A-0 104 775 (STAUFFER CHEMICAL CORP.) --- | | |
| P,X | JOURNAL OF MEDICINAL CHEMISTRY, vol. 28, 1985, pages 57-66, American Chemical Society, Washington, DC, US; J.T. SUH et al.: "Angiotensin-converting enzyme inhibitors. New orally active antihypertensive (mercaptoalkanoyl)-and [(acylthio)alkanoyl]glycine derivatives" * Page 60, table 1, compounds 15,16 * ----- | 1 | TECHNICAL FIELDS SEARCHED (Int Cl.4) |

The present search report has been drawn up for all claims

| Place of search | Date of completion of the search | Examiner |
|---|---|---|
| THE HAGUE | 03-04-1986 | PAUWELS G.R.A. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document